# EUROPÄISCHE PATENTSCHRIFT

(11) **EP 2 598 252 B1**
(45) Veröffentlichungstag und Bekanntmachung des Hinweises auf die Patenterteilung: **28.01.2015**
(21) Anmeldenummer: 11735660.0
(22) Anmeldetag: 26.07.2011
(51) Int. Cl.: B04B 11/08, C12H 1/065, C12H 1/14

(54) **SEPARATOR MIT EINER SCHLEUDERTROMMEL**
SEPARATOR HAVING A CENTRIFUGAL DRUM
SÉPARATEUR À TAMBOUR CENTRIFUGE

(30) Priorität: 30.07.2010 DE 102010032859
(43) Veröffentlichungstag der Anmeldung: 05.06.2013
(73) Patentinhaber: GEA Mechanical Equipment GmbH, 59302 Oelde (DE)
(72) Erfinder: HERBERG, Wolf-Dietrich, 58456 Witten (DE); WAUBKE, Carsten, 59302 Oelde (DE)
(74) Vertreter: Specht, Peter
(86) Internationale Anmeldenummer: PCT/EP2011/062796
(87) Internationale Veröffentlichungsnummer: WO 2012/013654

(56) Entgegenhaltungen:
- DE-A1- 1 802 676
- DE-B3- 10 335 191
- DE-U1- 8 130 833

## Beschreibung

Die Erfindung betrifft einen Separator nach dem Oberbegriff des Anspruchs 1.

Zum Stand der Technik von Separatoren mit vertikaler Drehachse und zwei Greifern bzw. Schälscheiben werden die DE 18 02 676, die US 4,417,885 und die US 5,487,720 genannt. In der DE 18 02 676 wird vorgeschlagen, intermittierend Druck- und Strömungsveränderungen zu erzeugen. In eine untere Schälkammer mündet ein Rohr zur Flüssigkeitszufuhr. In der unteren Schälkammer kann ferner ein Luftdruck aufgebaut werden.

Ein gattungsgemäßer Separator mit zwei Schälscheiben ist aus der DE 81 30 833 U1 bekannt. Dabei ist ein Kanal mit einem Anschluss zur Gaseinleitung vorgesehen, mit dem Gas zwischen die beiden Schälscheiben geleitet werden kann. Ein gattungsgemäßer Separator ist ferner aus der DE 10 2004 051 264 A1 bekannt. Problematisch ist bei empfindlichen Produkten wie Bier eine mögliche Sauerstoffaufnahme durch das Produkt. Die Erfindung hat die Aufgabe, diesem nachteiligen Effekt entgegen zu wirken bzw. ihn zu verringern.

Die Erfindung löst diese Aufgabe durch den Gegenstand des Anspruchs 1 und das Verfahren des Anspruchs 12. Danach sind die Greiferkammern mit den beiden Greifern relativ zur Drehachse D ringraumartig koaxial angeordnet. Sie sind ferner vorzugsweise - nicht aber zwingend - im Bezug auf die Drehachse D axial teilversetzt zueinander angeordnet. Es ist ferner radial zwischen dem Außenumfang des inneren Greiferschaftes und dem Innenumfang des äußeren Greiferschaftes eine ebenfalls ringraumartige Kammer ausgebildet, in welche durch einen Kanal ein Fluid wie ein Inertgas einbringbar ist, welches von der ringraumartigen Kammer aus bis in die Greiferkammern des rotierenden System gedrückt werden kann.

Die Erfindung schafft einen Separator, mit dem es auf einfache Weise möglich ist, bei der Verarbeitung eines sauerstoffempfindlichen Produktes ein Inertgas in den Bereich der Greiferkammern zu leiten, um zu verhindern, dass das Produkt mit dem Sauerstoff in diesem Bereich in Berührung gelangt. Besonders geeignet ist der Separator dazu, bei der Klärung von Bier von Hefe das Bier als leichtere Phase mit dem Inertgas vor einer Sauerstoffberührung zu schützen.

Zwar ist es auch aus der DE 20 2007 009 212 bekannt, ein Gas in den Bereich eines Trommelkopfes zwischen einem Greifer für eine leichtere Phase und einem Überlauf zur Ableitung einer schwereren Phase zu leiten. Dort wird das Gas aber dazu verwendet, die Trennzone in der Trommel zu verschieben. Erfindungsgemäß wird es dagegen auf konstruktiv einfache Weise möglich, ein Inertgas ohne hohen Druck, der eine Trennzonenverschiebung bewirken könnte, in den Bereich zwischen zwei Greifern zu leiten, wozu sich insbesondere die Konstruktion mit zwei radial quasi "konzentrisch" zueinander liegenden Greiferkammern und Greifern als vorteilhaft erweist.

Vorteilhafte Ausgestaltungen und Weiterbildungen sind den Unteransprüchen zu entnehmen.

Nachfolgend wird die erfindungsgemäße Vorrichtung anhand eines Ausführungsbeispiels unter Bezug auf die beigefügte Zeichnung näher erläutert.

Vor der Beschreibung bevorzugter Ausführungsbeispiele sei angemerkt, dass nachfolgend einige bevorzugte Ausgestaltungen auch im Detail beschrieben werden, dass die Erfindung aber nicht auf diese Ausgestaltungen beschränkt ist sondern im Rahmen der Ansprüche beliebig variiert ausgestaltet werden kann. Insbesondere sind Begriffe wie "oben", "unten", "vorne" oder "hinten" nicht einschränkend zu verstehen sondern beziehen sich lediglich auf die jeweils dargestellte Anordnung. Zudem sind, wenn einzelne Bestandteile erläutert werden, diese - wenn nicht anders erwähnt - grundsätzlich auch in mehrfacher Ausgestaltung denkbar. Unter den Schutzbereich fallen zudem auch funktionale Umkehrungen der dargestellten Anordnungen und Verfahren sowie äquivalente Ausgestaltungen.

In der Zeichnung zeigen:
- Fig. 1: eine Detailansicht des oberen Bereiches einer erfindungsgemäßen Separatortrommel; und
- Fig. 2: eine schematische Schnittansicht eines bekannten Separators.

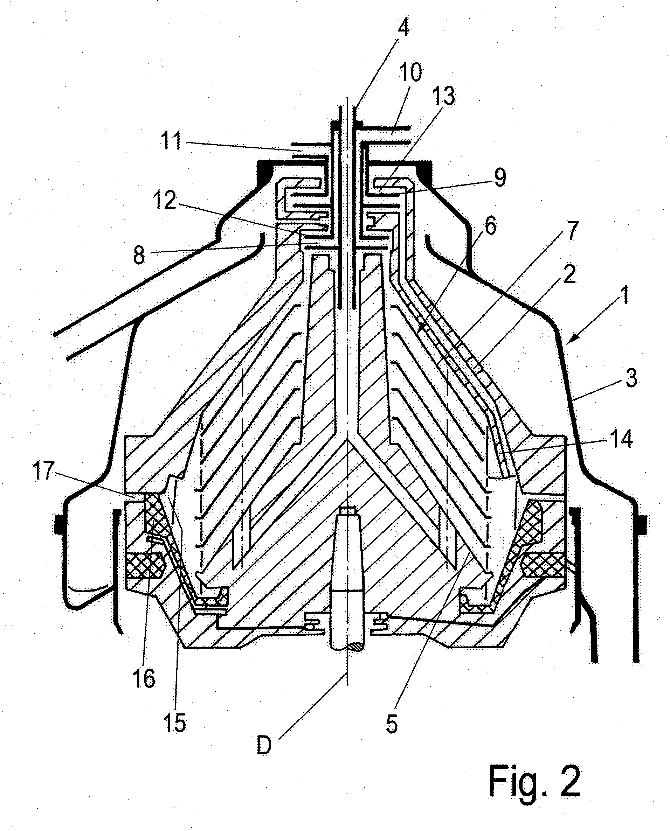

Fig. 2 zeigt eine schematisierte Schnittansicht eines bekannten - für einen kontinuierlichen Betrieb ausgelegten - Separators 1. Der Separator 1 weist eine drehbare Trommel 2 auf und eine ein- oder mehrteilige, die Trommel ganz oder weitgehend umgebende, nicht drehbare Haube 3.

Die Trommel 2 mit vertikaler Trommel- und Drehachse D (ohne Berücksichtigung der Präzessionsbewegung) weist ein sich nicht im Betrieb mit der Trommel 2 drehendes Zulaufrohr 4 auf, das beispielhaft von oben in die Trommel 2 geführt ist. Dem Zulaufrohr 4 ist ein Verteiler 5 nachgeschaltet, durch den das Schleudergut in die Trommel 2 leitbar ist. In der Trommel 2 ist ein Tellerpaket 6 aus einer Vielzahl von konischen Tellern 7 angeordnet.

Die Ableitung von hier beispielhaft zwei Flüssigkeitsphasen aus der Trommel 2 erfolgt mittels zweier Schälscheiben oder Greifer 8, 9, denen Ablaufleitungen 10, 11 zugeordnet sind und die jeweils in vertikal übereinander liegenden Greiferkammern 12, 13 angeordnet sind.

Die Greifer stehen im Betrieb still bzw. drehen sich nicht mit der Trommel mit.

Die leichtere Flüssigkeitsphase wird radial nach innen abgeleitet und dann durch den ersten Greifer 8 aus dem drehenden System geleitet, während die zweite, im Vergleich zur ersten Flüssigkeitsphase schwerere Flüssigkeitsphase über einen Scheideteller oder einen Kanal 14 im Trommeldeckel 26 in die zweite Greiferkammer 13 geleitet wird. Aus der zweiten Greiferkammer erfolgt dann die Ableitung der schwereren Flüssigkeitsphase mit dem zweiten Greifer 9.

Die schwere Flüssigkeitsphase kann auch eine eben gerade noch fließfähige Pülpe oder Hefesuspension sein, wie sie beispielsweise bei der Verarbeitung von feststoffbelasteten Suspensionen wie Überschusshefe oder Geläger aus Brauereien und Weinkellereien sowie Frucht /Citrussäften anfällt.

Zum Entleeren von weiteren, sich im Feststoffraum 15 ansammelnden Feststoffen, dient nach Fig. 2 ein Kolbenschieber 16, der beispielsweise in hier nicht dargestellter Weise pneumatisch oder hydraulisch betätigbar ist und Feststoffaustragsöffnungen 17 freigibt oder verschließt.

Insofern ist Fig. 2 rein erläuternd zu verstehen. Sie zeigt nicht die erfindungsgemäße Ausgestaltung im Bereich der Greifer 8, 9.

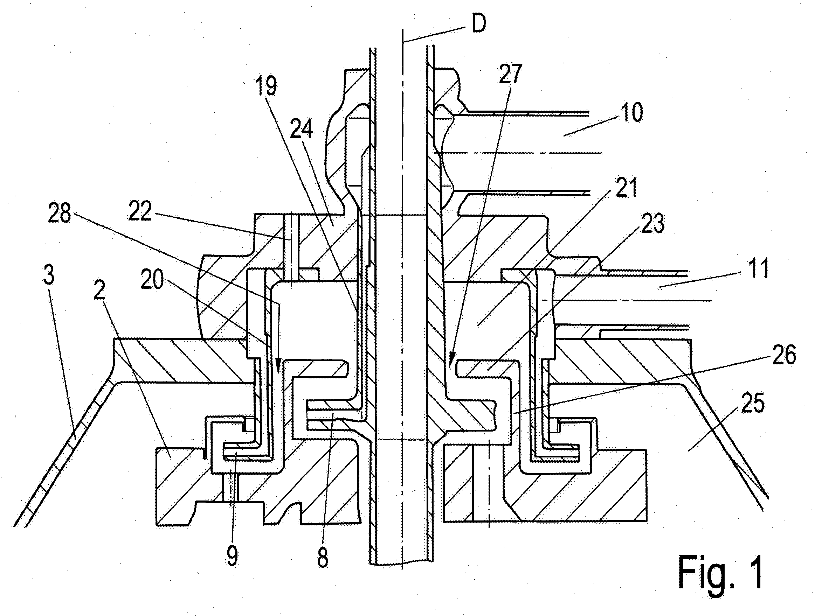

Erfindungsgemäß kann der obere Bereich des Separators durch eine Konstruktion ersetzt werden, wie sie in Fig. 1 dargestellt ist. dabei sind dann nach wie vor sämtliche übrigen Elemente wie Zulauf, Verteiler, Tellerpaket, Kolbenschieber usw. vorhanden.

Nach Fig. 1 sind nach wie vor zwei sich im Betrieb nicht mit der Trommel drehende Greifer 8, 9 zur Ableitung zweier fließfähiger Phasen vorhanden.

Anders als in Fig. 2 liegen die Greifer 8, 9 und die Greiferkammern 12, 13 aber nicht vertikal/axial übereinander sondern eher in nahezu gleicher vertikaler Höhe. Dabei ist die erste Greiferkammer 12 für den ersten Greifer 8 für die leichtere, nach innen abgeleitete Flüssigkeitsphase ist (radial) relativ zur Drehachse D weiter innen angeordnet und die zweite Greiferkammer 13 für den zweiten Greifer 9 für die schwere, weiter außen abgegriffene fließfähige Phase (radial) weiter außen in der Trommel 1 angeordnet. Der radiale Versatz der ringartig um die Drehachse umlaufenden Greiferkammern 12, 13 ist derart zu verstehen, dass die beiden Greiferkammern auf unterschiedlichen Radien (kreis-)ringraumartig bzw. ringförmig um die Drehachse umlaufen. Die beiden Greiferkammern liegend dadurch koaxial zueinander. Die beiden Greiferkammern 12, 13 liegen ferner in Fig. 1 axial teilversetzt zueiander, was eine ganz besonders bevorzugte Ausgestaltung ist.

Die beiden Greiferkammern 12, 13 sind in der sich drehenden Trommel 1 ausgebildet. Die Schäfte 19, 20 der Greifer 8, 9 sind nach oben aus der Trommel geführt.

Die Greiferkammer 12, 13 werden jeweils von Greiferkammerdeckeln 23, 24 eingefasst, wobei der äußere - obere - Greifer den eigenen, sich im Betrieb nicht mit drehenden Greiferkammerdeckel 24 aufweist, der vertikal oberhalb des ersten-sich im Betrieb drehenden - Greiferkammerdeckels 23 liegt, welcher von dem oberen Abschnitt des Trommeldeckels 26 gebildet sein kann.

Dabei wird zwischen dem Außenumfang des inneren Greiferschaftes 19 und dem Innenumfang des äußeren Greiferschaftes 20 eine ringraumartige Kammer 21 gebildet. In diese Kammer 21 ist durch einen Kanal 22 in dem vertikal oberen Greiferkammerdeckel 24 - den beide Schäfte durchlaufen - außerhalb des drehenden Systems ein Fluid wie ein Inertgas einbringbar, welches von der Kammer 21 aus bis in die Greiferkammern 12, 13 des rotierenden System gedrückt werden kann, und dort insbesondere unter den zweiten äußeren Greifer 9. Die ringraumartige Kammer 21 ist - bezogen auf die im Wesentlichen vertikale Drehachse D - axial oberhalb der beiden Greiferkammern ausgebildet ist und mit diesen über Fluidwege 27, 28 verbunden. Diese Fluidwege 27, 28 setzen unten an der Kammer 21 an und sind - wiederum ringraumartig - unterhalb der Kammer 21 einerseits zwischen dem Innenumfang des unteren ersten - sich vorzugsweise im Betrieb drehenden - Greiferkammerdeckels 23 und dem (im Betrieb stillstehenden) Schälscheibenschaft 19 ausgebildet und andererseits zwischen dem Außenumfang des Greiferkammerdeckels 23 und dem Innenumfang des (im Betrieb stillstehenden) äußeren Schälscheibenschaftes 20.

Durch das Einblasen von Inertgas wie CO₂ wird derart auf einfache, aber effektive Weise verhindert, dass Luft bzw. Sauerstoff in die Greiferkammern, insbesondere in die innere Greiferkammer 12 zum Abgreifen des eigentlichen Produkts eindringen kann. Dies ist beispielsweise bei der Klärung von Bier von Hefe vorteilhaft, da derart kein Sauerstoff an das Produkt, d.gh. an das Bier, gelangen kann.

Werden Entleerungen der Separatortrommel durchgeführt, kann es zu einem Unterdruck in der Trommel kommen, welcher durch das Inertgas kompensiert wird.

Bei Reinigungsvorgängen wird anstelle eines Gases ein Reinigungsfluid zugeleitet, so dass auch eine einfache und gründliche Reinigung des Systems möglich ist.

Die schwere noch fließfähige Phase kann anstelle über einen Scheideteller auch durch eine Düse, insbesondere eine Viscondüse, abgeleitet werden. Im Gegensatz zu Standarddüsen garantieren Viscondüsen - wie sie von der Anmelderin an sich bekannt sind beispielsweise für Biomassenaufkonzentration - durch eine selbsttätige, interne Konzentrationsregelung eine nahezu konstante Biomassenkonzentration auch bei schwankenden Zulaufmengen und -konzentrationen. Die hier nicht dargestellte Viscondüse wird dann in Ableitungsrichtung der äußeren Greiferkammer 13 vorgeschaltet. Sie ermöglicht in hervorragender Weise eine Konzentrationsregelung der schwereren noch fließfähigen Phase wie einer Hefephase bei der Herstellung von Bier.

Zwischen der Haube 3 und der Trommel 2 ist ein zusätzlicher Raum 25 ausgebildet, der optional auch mit Inertgas wie CO₂ beschickt werden kann, so beispielhaft durch eine hier nicht dargestellte optionale Zuführung.

### Bezugszeichen

- Separator: 1
- Trommel: 2
- Haube: 3
- Zulaufrohr: 4
- Verteiler: 5
- Tellerpaket: 6
- Teller: 7
- Schälscheiben: 8, 9
- Ablaufleitungen: 10, 11
- Greiferkammern: 12, 13
- Scheideteller: 14
- Feststoffraum: 15
- Kolbenschieber: 16
- Feststoffaustragsöffnungen: 17
- Schaft: 19, 20
- Kammer: 21
- Kanal: 22
- Greiferkammerdeckel: 23, 24
- Raum: 25
- Trommeldeckel: 26
- Fluidwege: 27, 28
- Trommelachse: D

## Patentansprüche

1. Separator mit
a) einer drehbaren Trommel (2) mit vertikaler Drehachse (M), in welcher vorzugsweise ein Tellerpaket (7) angeordnet ist,
b) wenigstens zwei sich im Betrieb nicht mit der Trommel drehenden Greifern (8, 9) zur Ableitung voneinander getrennter fließfähiger Phase, denen Ablaufleitungen 10, 11 zugeordnet sind und die jeweils in Greiferkammern (12, 13) der Trommel (1) angeordnet sind,
c) wobei die Greifer (8, 9) jeweils ferner Greiferschäfte (19, 20) aufweisen, die axial aus der Trommel ragen,
**dadurch gekennzeichnet, dass**
d) die Greiferkammern (12, 13) mit den beiden Greifern (8, 9) relativ zur Drehachse D radial versetzt zueinander auf verschiedenen Radien um die Drehachse umlaufen, derart, dass radial zwischen dem Außenumfang des inneren Greiferschaftes (19) und dem Innenumfang des äußeren Greiferschaftes (20) eine Kammer (21) ausgebildet ist, in welche durch einen Kanal (22) ein Fluid wie ein Inertgas einbringbar ist, welches von der Kammer (21) aus bis in die Greiferkammern (12, 13) des rotierenden System gedrückt werden kann.

2. Separator nach Anspruch 1, **dadurch gekennzeichnet, dass** die beiden Greiferkammern (12, 13) relativ zur Drehachse D derart radial versetzt zueinander auf verschiedenen Radien um die Drehachse umlaufen, dass sie koaxial zueinander angeordnet sind.

3. Separator nach Anspruch 2, **dadurch gekennzeichnet, dass** die beiden Greiferkammern (12, 13) axial teilversetzt zueiander angeordnet sind.

4. Separator nach Anspruch 1, 2 oder 3, **dadurch gekennzeichnet, dass** die Kammer (21) ringraumartig ausgebildet ist.

5. Separator nach Anspruch 3, **dadurch gekennzeichnet, dass** die ringraumartige Kammer (21) nach oben hin von einem Greiferkammerdeckel (24) und nach unten hin von einem Greiferkammerdeckel (23) begrenzt wird.

6. Separator nach Anspruch 1, 2 oder 3, **dadurch gekennzeichnet, dass** die ringraumartige Kammer (21) bezogen auf die im vertikale Drehachse (D) axial oberhalb der beiden Greiferkammern ausgebildet ist und mit diesen über Fluidwege (27, 28) verbunden ist.

7. Separator nach Anspruch 6, **dadurch gekennzeichnet, dass** die Fluidwege (27, 28) einerseits zwischen dem Innenumfang des unteren ersten Greiferkammerdeckels (23) und dem inneren Schälscheibenschaft (19) und andererseits zwischen dem Außenumfang des Greiferkammerdeckels (23) und dem Innenumfang des äußeren Schälscheibenschaftes (20) ausgebildet sind.

8. Separator nach einem der vorstehenden Ansprüche, **dadurch gekennzeichnet, dass** er ein Feststoffentleerungssystem, vorzugsweise mit einem Kolbenschieber (13) zum Öffnen und Verschließen von Feststoffaustragsöffnungen (17) in der Trommel (2) aufweist.

9. Separator nach einem der vorstehenden Ansprüche, **dadurch gekennzeichnet, dass** die Greiferkammern (12, 13) jeweils von Greiferkammerdeckeln (23, 24) eingefasst sind, wobei der äußere Greifer (9) einen eigenen, sich im Betrieb nicht mit drehenden Greiferkammerdeckel (24) aufweist, der vertikal oberhalb des ersten Greiferkammerdeckels (23) liegt.

10. Separator nach einem der vorstehenden Ansprüche, **dadurch gekennzeichnet, dass** der äußeren Greiferkammer eine Düse, insbesondere eine Viscondüse, vorgeschaltet ist.

11. Separator nach einem der vorstehenden Ansprüche, **dadurch gekennzeichnet, dass** zwischen einer die Trommel (2) umgebenden, sich im Betrieb nicht drehenden Haube (3) und der Trommel (2) ein Raum (25) ausgebildet ist, der optional mit Inertgas beschickbar ist.

12. Verfahren zur Klärung eines Getränks, insbesondere von Bier, von einer noch fließfähigen Feststoffphase, insbesondere von Hefe, mit einem Separator nach einem der vorstehenden Ansprüche, **dadurch gekennzeichnet, dass** bei der Klärung das Getränk als die leichtere Phase mit einem Inertgas, insbesondere CO₂, vor einer Sauerstoffberührung geschützt wird.

## Claims

1. A separator, comprising
a) a rotatable drum (2) with vertical rotational axis (M), in which a disc stack (7) is preferably arranged;
b) at least two grippers (8, 9) not rotating with the drum in operation for discharging mutually separated flowable phases, to which discharge lines (10, 11) are assigned and which are respectively arranged in gripper chambers (12, 13) of the drum (1),
c) with the grippers (8, 9) respectively further comprising gripper shafts (29, 20) which protrude axially from the drum,
**characterized in that**
d) the gripper chambers (12, 13) with the two grippers (8, 9) revolve on different radii about the rotational axis radially offset with respect to each other relative to the rotational axis D, such that a chamber (21) is formed radially between the outer circumference of the inner gripper shaft (19) and the inner circumference of the outer gripper shaft (20), into which a fluid such as an inert gas can be introduced through a channel (22), which fluid can be pressed from the chamber (21) up to and into the gripper chambers (12, 13) of the rotating system.

2. A separator according to claim 1, **characterized in that** the two gripper chambers (12, 13) revolve about the rotational axis on different radii in a radially offset manner relative to the rotational axis D in such a way that they are arranged coaxially with respect to each other.

3. A separator according to claim 2, **characterized in that** the two gripper chambers (12, 13) are arranged axially partly offset with respect to each other.

4. A separator according to claim 1, 2 or 3, **characterized in that** the chamber (21) is arranged in an annular way.

5. A separator according to claim 3, **characterized in that** the annular chamber (21) is delimited upwardly by a gripper chamber cover (24) and downwardly by a gripper chamber cover (23).

6. A separator according to claim 1, 2 or 3, **characterized in that** the annular chamber (21) is arranged axially above the two gripper chambers relative to the vertical rotational axis (D) and is connected with said gripper chambers via fluid paths (27, 28).

7. A separator according to claim 6, **characterized in that** the fluid paths (27, 28) are arranged between the inner circumference of the bottom first gripper chamber cover (23) and the inner peeling disc shaft (19) on the one hand and between the outer circumference of the gripper chamber cover (23) and the inner circumference of the outer peeling disc shaft (20) on the other hand.

8. A separator according to one of the preceding claims, **characterized in that** it comprises a solids discharge system, preferably with a piston slide valve (13) for opening and closing solids discharge openings (14) in the drum (2).

9. A separator according to one of the preceding claims, **characterized in that** the gripper chambers (12, 13) are respectively enclosed by gripper chamber covers (23, 24), with the outer gripper (9) comprising a separate gripper chamber cover (24) which does not co-rotate in operation and which is disposed vertically above the first gripper chamber cover (23).

10. A separator according to one of the preceding claims, **characterized in that** the outer gripper chamber is provided upstream with a nozzle, especially a viscon nozzle.

11. A separator according to one of the preceding claims, **characterized in that** a space (25) which can optionally be supplied with inert gas is arranged between a cover (3) and the drum (2), which cover encloses the drum (2) and does not rotate in operation.

12. A method for clarifying a beverage, especially beer, from a flowable solids phase, especially yeast, comprising a separator according to one of the preceding claims, **characterized in that** during the clarification the beverage, as the lighter phase, is protected from oxygen contact by an inert gas, especially CO₂.

## Revendications

1. Séparateur comprenant
a) un tambour (2) rotatif comprenant un axe de rotation vertical (M), dans lequel est disposé de préférence un jeu de plateaux (7),
b) au moins deux systèmes de préhension (8, 9) ne tournant pas avec le tambour en mode de fonctionnement, servant à évacuer des phases liquides séparées l'une de l'autre, des conduits d'évacuation (10, 11) étant associés auxdits systèmes de préhension et ces derniers étant disposés respectivement dans des chambres de système de préhension (12, 13) du tambour (1),
c) sachant que les systèmes de préhension (8, 9) présentent respectivement en outre des tiges de système de préhension (19, 20), lesquelles dépassent axialement du tambour,
**caractérisé en ce que**
d) les chambres de système de préhension (12, 13) dotées des deux systèmes de préhension (8, 9) sont amenées en rotation autour de l'axe de rotation sur différents rayons les unes par rapport aux autres, de manière décalée radialement par rapport à l'axe de rotation D, de telle manière qu'est réalisée entre la périphérie extérieure de la tige de système de préhension intérieure (19) et la périphérie intérieure de la tige de système de préhension extérieure (20), une chambre (21), dans laquelle un fluide tel qu'un gaz inerte peut être introduit par un canal (22), lequel fluide peut être poussé de la chambre (21) jusque dans les chambres de système de préhension (12, 13) du système en rotation.

2. Séparateur selon la revendication 1, **caractérisé en ce que** les deux chambres de préhension (12, 13) sont amenées en rotation autour de l'axe de rotation, sur différents rayons les unes par rapport aux autres, de manière décalée radialement par rapport à l'axe de rotation D de telle manière qu'elles sont disposées de manière coaxiale l'une par rapport à l'autre.

3. Séparateur selon la revendication 2, **caractérisé en ce que** les deux chambres de système de préhension (12, 13) sont disposées l'une par rapport à l'autre de manière partiellement décalée axialement.

4. Séparateur selon la revendication 1, 2, ou 3, **caractérisé en ce que** la chambre (21) est réalisée à la manière d'un espace annulaire.

5. Séparateur selon la revendication 3, **caractérisé en ce que** la chambre (21) de type espace annulaire est délimitée en direction du haut par un couvercle de chambre de système de préhension (24) et en direction du bas par un couvercle de chambre de système de préhension (23).

6. Séparateur selon la revendication 1, 2 ou 3, **caractérisé en ce que** la chambre (21) de type espace annulaire est réalisée de manière axiale au-dessus des deux chambres de système de préhension par rapport à l'axe de rotation (D) vertical et est reliée à ces dernières par l'intermédiaire de voies pour fluide (27, 28).

7. Séparateur selon la revendication 6, **caractérisé en ce que** les voies pour fluide (27, 28) sont réalisées d'une part entre la périphérie intérieure du premier couvercle inférieur de chambre de système de préhension (23) et la tige intérieure de disque de raclage (19) et d'autre part entre la périphérie extérieure du couvercle de chambre de système de préhension (23) et la périphérie intérieure de la tige extérieure de disque de raclage (20).

8. Séparateur selon l'une quelconque des revendications précédentes, **caractérisé en ce que** ledit séparateur présente un système de vidange de matières solides, de préférence pourvu d'un robinet à piston (13) servant à ouvrir et à fermer des ouvertures de distribution de matières solides (17) dans le tambour (2).

9. Séparateur selon l'une quelconque des revendications précédentes, **caractérisé en ce que** les chambres de système de préhension (12, 13) sont comprises respectivement par des couvercles de chambre de système de préhension (23, 24), sachant que le système de préhension extérieur (9) présente un couvercle de chambre de système de préhension (24) propre, ne tournant pas en fonctionnement, lequel se trouve verticalement au-dessus du premier couvercle de chambre de système de préhension (23).

10. Séparateur selon l'une quelconque des revendications précédentes, **caractérisé en ce qu'**une buse, en particulier une buse de Viscon, est installée en amont de la chambre extérieure de système de préhension.

11. Séparateur selon l'une quelconque des revendications précédentes, **caractérisé en ce qu'**un espace (25) qui peut être chargé en option avec un gaz inerte, est réalisé entre un capot (3) entourant le tambour (2), ne tournant pas en fonctionnement et le tambour (2).

12. Procédé servant clarifier une boisson, en particulier de la bière, issue d'une phase solide pouvant encore couler, en particulier de la levure, à l'aide d'un séparateur selon l'une quelconque des revendications précédentes, **caractérisé en ce que** lors de la clarification, la boisson en tant que phase plus légère est protégée à l'aide d'un gaz inerte, en particulier du CO₂, pour éviter le contact avec de l'oxygène.
